(19) Europäisches Patentamt
European Patent Office
Office européen des brevets

(11) Publication number: **0 247 334 B1**

(12) # EUROPEAN PATENT SPECIFICATION

(45) Date of publication of patent specification:
18.09.91 Bulletin 91/38

(51) Int. Cl.$^5$: **G11B 5/64**, G11B 5/706

(21) Application number: 87104996.1

(22) Date of filing: 03.04.87

(54) **Magnetic recording medium.**

(30) Priority: 03.04.86 JP 77160/86
18.06.86 JP 141963/86
19.06.86 JP 143252/86

(43) Date of publication of application:
02.12.87 Bulletin 87/49

(45) Publication of the grant of the patent:
18.09.91 Bulletin 91/38

(84) Designated Contracting States:
DE FR GB

(56) References cited:
EP-A- 0 120 413
EP-A- 0 125 150
PATENT ABSTRACTS OF JAPAN, vol. 7, no.
172 (P-213)[1317], 29th July 1983, & JP - A - 58
077 026 (TOKYO DENKI KAGAKU KOGYO K.K.)
10-05-1983
PATENT ABSTRACTS OF JAPAN, vol. 7, no.
152 (P-208)[1297], 5th July 1983; & JP - A - 58
062 823 (NIPPON DENKI K.K.) 14-04-1983

(73) Proprietor: MATSUSHITA ELECTRIC
INDUSTRIAL CO., LTD.
1006, Oaza Kadoma
Kadoma-shi, Osaka-fu, 571 (JP)

(72) Inventor: Sugita, Ryuji
8-7, Ogura-cho
Hirakata City, 573 (JP)
Inventor: Tohma, Kiyokazu
26-5, Ikaga-nishimachi
Hirakata City, 573 (JP)
Inventor: Honda, Kazuyoshi
5-34, Johnan-cho 1-chome
Takatsuki City, 569 (JP)
Inventor: Nanbu, Taro
3-5, Uenodouri 3-chome Nada-ku
Kobe City, 657 (JP)

(74) Representative: Dr. Elisabeth Jung Dr. Jürgen
Schirdewahn Dipl.-Ing. Claus Gernhardt
P.O. Box 40 14 68 Clemensstrasse 30
W-8000 München 40 (DE)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### 1. FIELD OF THE INVENTION

The present invention relates generally to a recording medium, and more particularly to perpendicular magnetic recording medium having excellent characteristics for high density recording.

### 2. DESCRIPTION OF THE RELATED ART

A perpendicular recording system has been used as a magnetic recording system splendid in short wavelength recording characteristics. In this perpendicular recording system, a magnetic recording medium having a perpendicular magnetic anisotropy is required. When a signal is recorded on such a recording medium, a residual magnetization turns to about perpendicular direction to a surface thereof. Therefore, as a wavelength of the signal become short, demagnetizing field in the recording medium decreases, and superior reproducing output is obtained thereby. In the conventional perpendicular magnetic recording medium, a recording medium wherein a magnetic film (as a recording film) containing Co and Cr as main constituents and having perpendicular magnetic anisotropy (hereinafter referred to as Co-Cr perpendicular magnetic anisotropy film) is directly formed on a non-magnetic substrate made of polymer, non-magnetic metal and the like, or indirectly formed by putting a soft magnetic film on the substrate by sputtering method or vacuum vapor deposition method has been considered as one of most excellent recording medium.

When the Co-Cr perpendicular magnetic anisotropy film having satisfactory recording characteristics is manufactured by the sputtering method or the vacuum vapor deposition method, it is required that a temperature of the substrate is about 200 °C. Although the perpendicular magnetic anisotropy film can be obtained at under 200 °C, a coercive force Hc⊥ in perpendicular direction is considerably small. Particularly in case of the vacuum vapor deposition method, which is considered as the most suitable method for mass production of the magnetic film, when the temperature of the substrate is below 200 °C the coercive force is at most 200 Oe. Magnetization mechanism is based on not only a magnetization rotation suitable for magnetizing the perpendicular magnetic recording medium but also a magnetic wall displacement to a considerable extent. As a result, the reproducing output becomes small, but noise is rather large, and therefore, preferably high S/N ratio can not be obtained. On the other hand, when the Co-Cr perpendicular magnetic anisotropy film is formed under a condition of about 200 °C temperature of the substrate, Hc⊥ is about 40 - 80 kA/m, and the magnetization mechanism mainly depends on the magnetization rotation. In this case, the reproducing output is large, but rather the noise becomes small, and as a result, high S/N ratio is realized.

As mentioned above, in order to obtain the perpendicular magnetic anisotropy film having high S/N ratio, it is required that the temperature of the substrate is at about 200 °C. This means that it is difficult to use substrates of material of poor heat resistivity, such as polyethyleneterephthalate which is cheap and widely and commonly used for a magnetic tape or a floppy disk or the like. If the substrates of such material of poor heat resistivity can not be used, it is very much difficult to mass-product the perpendicular magnetic anisotropy film. In case that the polyethyleneterephthalate film can be used as the substrate, it is necessary to select the temperature of the substrate below 100 °C. Therefore, it is the most important problem to find a condition for forming the perpendicular magnetic anisotropy film on the substrate thereunder.

### OBJECT AND SUMMARY OF THE INVENTION

The present invention intends to solve the above-mentioned problem, and the purpose thereof is to provide a perpendicular magnetic recording medium splendid in recording and reproducing characteristic.

A magnetic recording medium of the present invention comprises a substrate made of non-magnetic material and a magnetic film which is formed on the substrate and contains Co, Cr, Ni, slight amount of impurity and at least one member selected from Cu, Al and P.

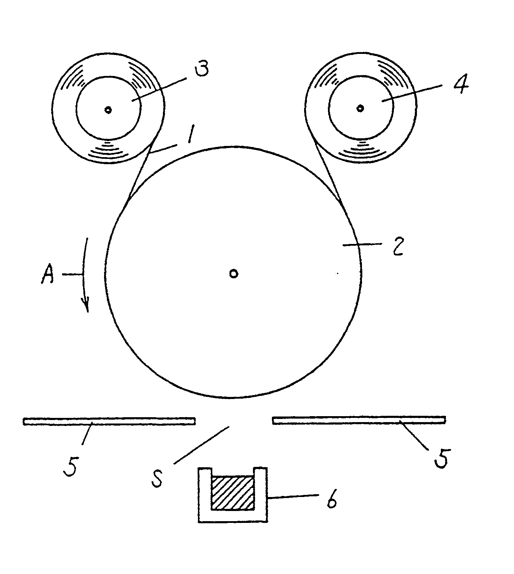

### BRIEF DESCRIPTION OF THE DRAWING

Attached drawing is a schematic sectional view showing a vacuum deposition apparatus used for manufacturing a magnetic recording medium of the present invention.

### DESCRIPTION OF THE PREFERRED EMBODIMENT

[Embodiment 1]

First, an embodiment of the present invention wherein a magnetic film contains Co, Cr, Ni, Cu and slight amount of impurity is described. Each magnetic film having the following composition is formed on a substrate of 10 μm thick polyethyleneterephthalate film by vacuum deposition method.

<Compositions of the magnetic film)

(1) $Co - Cr_{23wt\%}$

(2) $Co - Cr_{20wt\%} - Ni_{20wt\%}$

(3) $Co - Cr_{19wt\%} - Ni_{30wt\%}$

(4) $Co - Cr_{23wt\%} - Cu_{0.8wt\%}$

(5) $Co - Cr_{19wt\%} - Cu_{9wt\%}$

(6) $Co - Cr_{20wt\%} - Ni_{19wt\%} - Cu_{0.8wt\%}$

(7) $Co - Cr_{18wt\%} - Ni_{18wt\%} - Cu_{5wt\%}$.

With respect to these magnetic film, magnetic characteristic, crystallographical orientation and recording and reproducing characteristic were observed.

Drawing shows structure of an essential part of a vacuum vapor deposition apparatus for use in manufacturing the above-mentioned magnetic recording medium. A substrate 1 runs in a direction of arrow mark A along with a cylindrical can 2. A shield board 5 is provided between an evaporation source 6 and the cylindrical can 2. Evaporated atom deposits on the substrate 1 through a slit S. The substrate 1 is supplied from a supplying roll 3 and wound up onto a winding roll 4. In case that the magnetic film is formed by this vacuum vapor deposition apparatus, a tape shaped perpendicular magnetic recording medium is manufactured in high productivity. Deposition rate of the magnetic film is 0.6 μm/sec. Thickness of the magnetic film is 0.2 μm. Saturation magnetization Ms is 0.4 - 0.45 T. Moreover, concentrations of Cr and Cu in the magnetic film are adjusted by feeding necessary respective numbers of granules of Cr and Cu into the evaporation source 6. A temperature of surface of the cylindrical can 2 is set at 60 °C.

The magnetic characteristics of resultant magnetic film is measured by a vibrating sample magnetometer, to evaluate a coercive force $Hc\perp$ in perpendicular direction to a surface of the magnetic film and an in-plane coercive force $Hc_{/\!/}$ of the film. Result is shown in Table 1.

The crystallographical orientation is evaluated by measuring value of $\Delta\theta_{50}$. Value of $\Delta\theta_{50}$ is also shown in Table 1. The "$\Delta\theta_{50}$" designates a half width of a rocking curve with respect to (002) plane of the magnetic film having hexagonal close packed structure, and shows a degree of orientation of C axis in a perpendicular direction to the surface of the magnetic film. In general, as $\Delta\theta_{50}$ of the magnetic film becomes small the C axis more exactly orients to the perpendicular direction, and a perpendicular magnetic anisotropy energy becomes large. Therefore, the magnetic film having small $\Delta\theta_{50}$ is more suitable for the perpendicular magnetic recording medium. The recording and reproducing characteristic is measured by using a ring shaped head made of Mn-Zn ferrite and having 0.14 μm gap length. Signal reproducing output, noise and S/N ratio under a condition of 120 KFRPI are shown in Table 1. "120 KFRPI" means a recording density of digital signal wherein magnetization reverses 120000 times per 25.4 mm. The reproducing output, noise and S/N ratio are indicated by relative value taking the measuring data for $Co-Cr_{23wt\%}$ film as criterion ie. 0 dB.

Table 1

| Composition | $Hc_\perp$ ($\times$ 79.06 A/m) | $Hc_\parallel$ ($\times$ 79.06 A/m) | $\Delta\theta_{50}$ ($^\circ$) | Reproducing output (dB) | Noise (dB) | S/N (dB) |
|---|---|---|---|---|---|---|
| $Co-Cr_{23wt\%}$ | 120 | 180 | 4.8 | 0 | 0 | 0 |
| $Co-Cr_{20wt\%}-Ni_{20wt\%}$ | 160 | 160 | 6.3 | +1 | −1 | +2 |
| $Co-Cr_{19wt\%}-Ni_{30wt\%}$ | 210 | 200 | 12.5 | −1 | −1 | 0 |
| $Co-Cr_{23wt\%}-Cu_{0.8wt\%}$ | 150 | 150 | 6.9 | +1 | −1 | +2 |
| $Co-Cr_{19wt\%}-Cu_{9wt\%}$ | 280 | 280 | 24 | −5 | −2 | −3 |
| $Co-Cr_{20wt\%}-Ni_{19wt\%}-Cu_{0.8wt\%}$ | 510 | 380 | 7.2 | +6 | −7 | +13 |
| $Co-Cr_{18wt\%}-Ni_{18wt\%}-Cu_{5wt\%}$ | 530 | 370 | 9.4 | +6 | −7 | +13 |

As shown in Table 1, in case of the $Co-Cr_{23wt\%}$ film, $Hc_\perp$ is very much small as 120 x 79.6 A/m, but $Hc_\parallel$ is larger than $Hc_\perp$. As a result, it is proved that the magnetic wall displacement is dominant to considerable extent in the magnetization mechanism. Moreover, in case of $Co-Cr_{23wt\%}$ film, an absolute value of the reproducing output at 120 KFRPI is 150 µVp-p/mm·T·m/sec. "150 µVp-p/mm·T·m/sec" means that output is 150 µVp-p under a condition that track width of the head is 1 mm; number of turns of coil is one; relative velocity between the head and the recording medium is 1 m/sec. With respect to $Co-Cr_{20wt\%}-Ni_{20wt\%}$ film and $Co-Cr_{19wt\%}-Ni_{30wt\%}$ film, it is proved that due to addition of Ni to Co-Cr system, $Hc_\perp$ is increased to a certain extent, but $\Delta\theta_{50}$ becomes large thereby deteriorating the crystallographical orientation. When $\Delta\theta_{50}$ is under 10°, the recording and reproducing characteristic hardly deteriorates, but when $\Delta\theta_{50}$ is above 10°, the reproducing output, particularly in short wave length range, lowers. Therefore, the reproducing output, noise and S/N ratio are not substantially improved by adding only Ni to Co-Cr system.

Next, a magnetic film wherein Cu is added to Co-Cr system is explained. A $Co-Cr_{23wt\%}-Cu_{0.8wt\%}$ film shows slightly higher Hc than that of $Co-Cr_{23wt\%}$ film, but $\Delta\theta_{50}$ is also larger; and therefore, S/N ratio is improved only to the extent of about 2 dB. Moreover, in case of a $Co-Cr_{19wt\%}-Cu_{9wt\%}$ film wherein Cu addition amount is increased, $Hc_\perp$ becomes as high as 280 x 79.6 A/m, and $\Delta\theta_{50}$ is very much large as 24°; and therefore it is difficult to record the signal in perpendicular direction to the film face. As a result, the reproducing output under the condition of 120 KFRPI is lower than that of $Co-Cr_{23wt\%}$ film by 5 dB. As mentioned above, S/N ratio is hardly

4

improved only by adding Cu to the Co-Cr system. Furthermore, when the Cu addition amount is above 7 % by weight, the orientation of C axis in perpendicular direction to the film face is remarkably disturbed, and the recording film loses the perpendicular magnetic anisotropy.

Further, a magnetic film, wherein Ni and Cu are added to the Co-Cr system, is explained. Both of a Co-$Cr_{20wt\%}$-$Ni_{19wt\%}$-$Cu_{0.8wt\%}$ film and a Co-$Cr_{18wt\%}$-$Ni_{18wt\%}$-$Cu_{5wt\%}$ film show above 40 kA/m of $Hc\perp$ and below 10° of $\Delta\theta_{50}$. Moreover, these films show almost the same recording and reproducing characteristic, and under the condition of 120 KFRPI, the reproducing output is higher by 6 dB and noise is lower by 7 dB in comparison with the Co-$Cr_{23wt\%}$ film, and therefore S/N ratio is higher by 13 dB than that of the Co-$Cr_{23wt\%}$ film. The absolute value of the reproducing output at 120 KFRPI is very much large as 300 µVp-p/mm·T·m/sec. Moreover, $Hc\perp$ is larger than $Hc_{/\!/}$, and therefore it is considered that the magnetization mechanism is mainly based on the magnetization rotation.

For comparison, characteristics of the Co-$Cr_{23wt\%}$ film having 0.25 µm thickness and formed on a polyimide film having 12 µm thickness under the condition of 200°C of surface temperature of the cylindrical can in the same way as that of the magnetic film shown in Table 1 are shown in Table 2.

## Table 2

| Composition | $Hc\perp$ ($\times$ 79,06 A/m) | $Hc_{/\!/}$ ($\times$ 79,06 A/m) | $\Delta\theta_{50}$ ( ° ) | Reproducing output (dB) | Noise (dB) | S/N (dB) |
|---|---|---|---|---|---|---|
| Co-$Cr_{23wt\%}$ | 570 | 300 | 5.1 | +6 | -8 | +14 |

As is understood by comparing Tables 1 and 2, although the magnetic film wherein Ni and Cu are added to the Co-Cr system is manucfactured under a condition that the temperature of the cylindrical can is 60 °C where the polyethyleneterephtalate film can be used as the substrate, the magnetic characteristic and the recording and reproducing characteristics are substantially equal to those of the Co-Cr film manufactured under the condition of 200 °C temperature of surface of the cylindrical can and provided on a polyimide film having heat resistance. Moreover, $\Delta\theta_{50}$ of the present embodiment wherein Ni and Cu is added to the Co-Cr system is larger than that of the Co-Cr film, but when $\Delta\theta_{50}$ is lower than 10° the recording and reproducing characteristic is hardly influenced.

In case of Co-Cr-Ni-Cu film, when Cr addition amount is below 7 weight %, the perpendicular magnetic anisotropy is insufficient, and it is difficult to make the perpendicular recording. As a result, the output in a range of short wave length is very much lower. When addition amount of Cr is above 26 weight %, the output is very much small, since Ms (saturation magnetization) becomes too small. Therefore, it is necessary that the addition amount of Cr is 7-26 weight %. On the other hand, when the addition amount of Ni is less than 5 % by weight, an effect of addition of Ni can not be observed, and when it is more than 30 % by weight the perpendicular magnetic anisotropy is insufficient and practical perpendicular recording can not be made. When the addition amount of Cu is under 0.1 % by weight, an effect of addition of Cu can not be observed. Furthermore, when the addition amount of Cu is above 7 weight %, the perpendicular magnetic anisotropy is insufficient thereby considerably lowering the reproducing output in the short wave length range.

Hereinabove, the embodiments wherein polyethyleneterephthalate film or polyimide film is used as the substrate are explained, but, even when other polymer films or non-magnetic metals film are used as the substrate, almost the same results is obtainable. Furthermore, even when a soft magnetic film such as permalloy film or non-magnetic film made of Ti, Ge, Si, $Al_2O_3$ or the like is provided between the polymer film and the magnetic film such as Co-Cr film, Co-Cr-Ni film, Co-Cr-Cu film, Co-Cr-Ni-Cu film, the same results as the above is obtainable.

[Embodiment 2]

Next, further embodiment of the present invention, wherein a magnetic film is made of Co, Cr, Ni, Al and

slight amount of impurity or Co, Cr, Ni, Al, Cu and slight amount of impurity, is described. Each magnetic film having the following compositions are formed on a 10 μm thickness polyethyleneterephthalate film by the vacuum deposition method.

<Composition of the magnetic film>

    (1) Co - $Cr_{23wt\%}$

    (2) Co - $Cr_{23wt\%}$ - $Al_{0.4wt\%}$

    (3) Co - $Cr_{19wt\%}$ - $Al_{6wt\%}$

    (4) Co - $Cr_{20wt\%}$ - $Ni_{19wt\%}$ - $Al_{0.4wt\%}$

    (5) Co - $Cr_{18wt\%}$ - $Ni_{18wt\%}$ - $Al_{3wt\%}$.

With respect to these magnetic film, the magnetic characteristic, the crystallographical orientation and the recording and reproducing characteristic are observed.

Manufacturing method for these magnetic film is the same as that of Embodiment 1. In the vapor deposition process, deposition rate of the magnetic film is 0.6 μm/sec. The thickness of the magnetic film is 0.25 μm and the saturation magnetization Ms is 0.4 - 0.45 T. Concentrations of Cr and Al are adjusted by supplying granular Cr and Al into the evaporation source. Temperature of the surface of the cylindrical can is 60 °C.

Concerning resultant magnetic film, $Hc\perp$, $Hc_{/\!/}$, $\Delta\theta_{50}$, reproducing output measured by using a ring shaped Mn-Zn ferrite head with a gap of 0.14 μm length under the condition of 120 KFRRI, noise and S/N ratio are shown in Table 3. Additionally, the reproducing output, noise and S/N ratio are indicated by relative value taking the measuring data for $Co-Cr_{23wt\%}$ film as criterion i.e. 0 dB.

Table 3

| Composition | $Hc\perp$ (x 79.06 A/m) | $Hc_{/\!/}$ (x 79.06 A/m) | $\Delta\theta_{50}$ ( ° ) | Reproducing output (dB) | Noise (dB) | S/N (dB) |
|---|---|---|---|---|---|---|
| $Co-Cr_{23wt\%}$ | 120 | 180 | 4.8 | 0 | 0 | 0 |
| $Co-Cr_{23wt\%}-Al_{0.4wt\%}$ | 170 | 150 | 6.6 | +1 | -1 | ÷2 |
| $Co-Cr_{19wt\%}-Al_{6wt\%}$ | 300 | 280 | 25 | -6 | -2 | -4 |
| $Co-Cr_{20wt\%}-Ni_{19wt\%}-Al_{0.4wt\%}$ | 520 | 350 | 7.0 | +6 | -7 | ÷13 |
| $Co-Cr_{18wt\%}-Ni_{18wt\%}-Al_{3wt\%}$ | 560 | 370 | 8.7 | +6 | -7 | ÷13 |

Referring to Table 3, characteristics of Co-Cr-Al film and Co-Cr-Ni-Al film, are explained. $Co-Cr_{23wt\%}-Al_{0.4wt\%}$ film shows scarcely higher Hc than that of $Co-Cr_{23wt\%}$ film, but $\Delta\theta_{50}$ thereof is also somewhat large. Improvement of S/N ratio is about 2 dB. Moreover, $Co-Cr_{19wt\%}-Al_{6wt\%}$ film wherein addition amount of Al is large shows large $Hc\perp$ as 300 x 79.6 A/m, but $\Delta\theta_{50}$ is also very much large as 25 °C, and therefore, it is difficult to record a signal in perpendicular direction to the surface of the magnetic film. As a result, the reproducing output at 120 KFRPI is lower by 6 dB than that of the Co-Cr$_{23wt\%}$ film. As mentioned above, S/N ratio is hardly improved only by adding Al to Co-Cr system. Moreover, when the addition amount of Al is more than 4 % by weight, the orientation of C-axis in perpendicular direction to the surface thereof is drastically disturbed, thereby losing the perpendicular magnetic anisotropy.

On the other hand, in case of Co-Cr$_{20wt\%}$-Ni$_{19wt\%}$-Al$_{0.4wt\%}$ film and Co-Cr$_{18wt\%}$-Ni$_{18wt\%}$-Al$_{3wt\%}$ film, each Hc⊥ is above 40 kA/m, and $\Delta\theta_{50}$ is below 10°. The recording and reproducing characteristics of these magnetic films are almost equal to each other. The reproducing output at 120 KFRPI is higher by 6 dB and the noise is lower by 7 dB and therefore, S/N ratio is higher by 13 dB than those of the Co-Cr$_{23wt\%}$ film. The absolute value of the reproducing output at 120 KFRPI is very much large as 300 μVp-p/mm·T·m/sec. Moreover Hc⊥ is larger than Hc$_{/\!/}$ and the magnetization mechanism mainly depends on the magnetization rotation.

When 4 % by weight of Cu is further added to Co-Cr-Ni-Al system, Hc⊥ increases to reach 48 - 56 kA/m. In such a film, the reproducing output at 120 KFRRI is about the same as the magnetic film not containing Cu, but the noise lowers by 1–3 dB, and as a result, S/N ratio is improved. However, in case that the addition amount of Cu is over 4 % by weight, $\Delta\theta_{50}$ becomes above 10° thereby drastically lowering the reproducing output in the short wave length range.

From comparison of Table 3 with Table 2, it is proved that though the magnetic film wherein Ni and Al are added to Co-Cr system is manufactured under the condition of 60 °C of surface of the cylindrical can, where the polyethyleneterephthalate film can be used, it has almost the same magnetic characteristic and recording and reproducing characteristic as those of the Co-Cr magnetic film manufactured on the polyimide film having heat resistance under a condition of 200°C surface temperature of the cylindrical can. Additionally, though $\Delta\theta_{50}$ of the Co-Cr-Ni-Al film is larger than that of the Co-Cr film, when $\Delta\theta_{50}$ is below 10°, the recording and reproducing characteristic is hardly influenced.

In the Co-Cr-Ni-Al film and Co-Cr-Ni-Al-Cu film, when the addition amount of Cr is below 7 % by weight, it is difficult to make perpendicular recording, since the perpendicular magnetic anisotropy is insufficient. As a result, the output in the short wavelength range is very much small. Moreover, when the addition amount of Cr is above 26 % by weight, the output is very much small. Therefore, it is required that the addition amount of Cr is 7–26 % by weight. With respect to the addition amount of Ni, when the addition amount of Ni is below 5 weight %, no effect of addition of Ni is observed. Furthermore, when the addition amount of Ni is above 30 % by weight, it becomes difficult to make the perpendicular recording, since the perpendicular magnetic anisotropy is insufficient. When the addition amount of Al is below 0.1 % by weight, effects from the addition of Al can not recognized. When the addition amount of Al is above 4 % by weight, the perpendicular magnetic anisotropy becomes insufficient, thereby drastically lowering the reproducing output in the short wave length range.

In the above, the embodiments wherein the polyethyleneterephthalate film or the polyimide film is used as the substrate are described, but even when other polymer films or non-magnetic metals film are used as the substrate, almost the same result as the above-mentioned can be obtained. Moreover, even when the soft magnetic film such as permalloy film or non-magnetic film made of Ti, Ge, Si, Al$_2$O$_3$ or the like is provided between the polymer film and the magnetic film such as Co-Cr film, Co-Cr-Al film, Co-Cr-Ni-Al film and Co-Cr-Ni-Al-Cu film, the same results as the above can be obtained.

[Embodiment 3]

In the following, further embodiment of the present invention wherein the magnetic film is made of Co, Cr, Ni, P and slight amount of impurity is described. Each magnetic film having the following compositions are formed by the vacuum deposition method on a 10 μm thickness polyethyleneterephthalate film.

<Composition of the magnetic film>

(1) Co - Cr$_{23wt\%}$

(2) Co - Cr$_{23wt\%}$ - P$_{0.5wt\%}$

(3) Co - Cr$_{19wt\%}$ - P$_{6wt\%}$

(4) Co - Cr$_{20wt\%}$ - Ni$_{19wt\%}$ - P$_{0.5wt\%}$

(5) Co - Cr$_{18wt\%}$ - Ni$_{18wt\%}$ - P$_{3wt\%}$.

For these magnetic films, the magnetic characteristic, the crystallographical orientation and the recording and reproducing characteristic are observed. The manufacturing method for those magnetic film is the same as the case of the embodiment 1 and 2. In the vapor deposition process, deposition rate of the magnetic film is 0.6 μm/sec. The thickness and the saturation magnetization Ms of the magnetic film are 0.25 μm and 0.4 - 0.45 T, respectively. Concentrations of Cr and P in the magnetic film are adjusted by supplying granular Cr and Co-P-alloy into the evaporation source. Temperature of the surface of the cylindrical can is 60°C during the vapor deposition.

With respect to resultant magnetic film, hc⊥, $Hc_{/\!/}$ , $\Delta\theta_{50}$, reproducing output measured by using a ring shaped Mn-Zn ferrite head with gap of 0.14 μm length under the condition of 120 KFRPI, noise and S/N ratio are shown in Table 4. Additionally the reproducing output, noise and S/N ratio are indicated by relative value taking those of the Co-Cr$_{23wt\%}$ film as criterion i.e. 0 dB.

Table 4

| Composition | Hc⊥ (Oe) | Hc$_{/\!/}$ (Oe) | $\Delta\theta_{50}$ ( °) | Reproducing output (dB) | Noise (dB) | S/N (dB) |
|---|---|---|---|---|---|---|
| Co-Cr$_{23wt\%}$ | 120 | 180 | 4.8 | 0 | 0 | 0 |
| Co-Cr$_{23wt\%}$-P$_{0.5wt\%}$ | 260 | 170 | 6.1 | +2 | −2 | +4 |
| Co-Cr$_{19wt\%}$-P$_{6wt\%}$ | 470 | 420 | 28 | −7 | −3 | −4 |
| Co-Cr$_{20wt\%}$-Ni$_{19wt\%}$-P$_{0.5wt\%}$ | 740 | 380 | 6.8 | +7 | −7 | +14 |
| Co-Cr$_{18wt\%}$-Ni$_{18wt\%}$-P$_{3wt\%}$ | 810 | 400 | 9.2 | +6 | −7 | +13 |

Referring to Table 4, characteristics of Co-Cr-P film and Co-Cr-Ni-P films are explained. Co-Cr$_{23wt\%}$-P$_{0.5wt\%}$ film shows Hc⊥ as high as twice of the Co-Cr$_{23wt\%}$ film, and improvement of S/N ratio is about 4 dB. Moreover, Co-Cr$_{19wt\%}$-P$_{6wt\%}$ film wherein the addition amount of P is increased shows large Hc⊥ as 470 x 79.6 A/m, but $\Delta\theta_{50}$ is also very much large as 28°, and therefore, it is difficult to record a signal in perpendicular direction to the surface of the magnetic film. As a result, the reproducing output at 120 KFRPI is lower by 7 dB than that of the Co-Cr$_{23wt\%}$ film. When the addition amount of P is more than 5 weight %, the orientation of C axis in perpendicular direction to the surface of the magnetic film is drastically disturbed, thereby losing the perpendicular magnetic anisotropy.

On the other hand in case of Co-Cr$_{20wt\%}$-Ni$_{19wt\%}$-P$_{0.5wt\%}$ film and Co-Cr$_{18wt\%}$-Ni$_{18wt\%}$-P$_{3wt\%}$, each Hc⊥ is above 56 kA/m and further $\Delta\theta_{50}$ is below 10°. The recording and reproducing characteristics of them are almost equal to each other. The reproducing output at 120 KFRPI is higher by 6–7 dB and the noise is lower by 7 dB, and therefore, S/N ratio is higher by 13–14 dB than those of the Co-Cr$_{23wt\%}$ film. An absolute value of the reproducing output at 120 KFRPI is very much large as about 300 μVp-p/mm·T·m/sec. Moreover, Hc⊥ is larger than $Hc_{/\!/}$ , and the magnetization mechanism is mainly based on the magnetization rotation.

When Table 4 is compared with Table 2, it is proved that although Co-Cr-Ni-P film is manufactured under the condition of 60°C of surface of the cylindrical can where the polyethyleneterephthalate film can be used, it has almost the same recording and reproducing characteristic as that of the Co-Cr magnetic film provided on the polyimide film having heat resistance under a condition of 200°C of surface temperature of the cylindrical can. Additionally, although $\Delta\theta_{50}$ of the Co-Cr-Ni-P film is larger than that of the Co-Cr film, when $\Delta\theta_{50}$ is below

8

10°, the recording and reproducing characteristic is hardly influenced.

In the Co-Cr-Ni-P film, when the addition amount of Cr is below 7 % by weight, it is impossible to make the perpendicular recording, since the perpendicular magnetic anisotropy is insufficient. As a result, the output in the short wavelength range is very much small. Moreover, when the addition amount of Cr is above 26 % by weight, the output is very much small. Therefore, it is required that the addition amount of Cr is 7--26 % by weight. With respect to the addition amount of Ni, When the addition amount of Ni is below 5 weight %, no effect of addition of Ni is observed. Furthermore, when the addition amount of Ni is above 30 % by weight, it becomes difficult to make the perpendicular recording, since the perpendicular magnetic anisotropy is insufficient. When the addition amount of P is below 0.1 % by weight no effect of the addition of P is observed. Moreover, when the addition amount of P is above 5 weight %, the perpendicular magnetic anisotropy is insufficient thereby drastically lowering the reproducing output in the short wave length range.

In the above, the embodiment wherein the polyethyleneterephthalate film or the polyimide film is used as the substrate is explained, but even when other polymer films or non-magnetic metals are used as the substrate, almost the same result can be obtained. Moreover, even when the soft magnetic film such as permalloy film or non-magnetic film made of Ti, Ge, Si, $Al_2O_3$ or the like is provided between the polymer film and the magnetic film such as Co-Cr film, Co-Cr-P film, Co-Cr-Ni-P film, the same effects as the above is obtainable.

## Claims

1. Magnetic recording medium comprising
   a substrate made of non-magnetic material, and
   a magnetic film which is formed on said substrate and contains Co, Cr, Ni, slight amount of impurity and at least one member selected from Cu, Al and P.

2. Magnetic recording medium in accordance with claim 1, wherein
   said magnetic film contains Co, Cr, Ni, Cu, Al and slight amount of impurity.

3. Magnetic recording medium in accordance with claim 1; wherein
   said magnetic film contains 7--26 weight % of Cr, 5--30 weight % of Ni, and 0.1--7 weight % of Cu, and the remainder is Co and slight amount of impurity.

4. Magnetic recording medium in accordance with claim 1 and 2; wherein
   said magnetic film contains 7--26 weight % of Cr, 5--30 wt% of Ni, 0.1--4 weight % of Al and 4 or below weight % of Cu, and the remainder is Co and slight amount of impurity.

5. Magnetic recording medium in accordance with claim 1; wherein
   said magnetic film contains 7--26 weight % of Cr, 5--30 weight % of Ni and 0.1--5 weight % of P, and the remainder is Co and slight amount of impurity.

6. Magnetic recording medium in accordance with claim 1--5; wherein
   said magnetic film is a perpendicular magnetic anisotropy film.

7. Magnetic recording medium in accordance with claim 1--6; wherein
   said substrate is a polymer film.

8. Magnetic recording medium in accordance with claim 7; wherein
   a soft magnetic film is forced between said polymer film and said magnetic film.

9. Magnetic recording medium in accordance with claim 8; wherein
   said soft magnetic film is a permalloy film.

10. Magnetic recording medium in accordance with claim 7; wherein
    a Ti film is formed between said polymer film and said perpendicular magnetic anisotropy film.

11. Magnetic recording medium in accordance with claim 7; wherein
    a Ge film is formed between said polymer film and said perpendicular magnetic anisotropy film.

12. Magnetic recording medium in accordance with claim 7; wherein
    a Si film is formed between said polymer film and said perpendicular magnetic anisotropy film.

13. Magnetic recording medium in accordance with claim 7; wherein
    a metal oxide film is formed between said polymer film and said perpendicular magnetic anisotropy film.

14. Magnetic recording medium in accordance with claim 13; wherein
    said metal oxide is $Al_2O_3$.

## Patentansprüche

1. Magnetisches Aufzeichnungsmedium, umfassend

ein aus nichtmagnetischem Material gebildetes Substrat, und

einen magnetischen Film, der an dem Substrat gebildet ist und Co, Cr, Ni, eine geringe Menge einer Verunreinigung und wenigstens ein Element enthält, welches aus Cu, Al und P ausgewählt ist.

2. Magnetisches Aufzeichnungsmedium nach Anspruch 1, wobei

der magnetische Film Co, Cr, Ni, Cu, Al und eine geringe Menge einer Verunreinigung enthält.

3. Magnetisches Aufzeichnungsmedium nach Anspruch 1, wobei

der magnetische Film 7-26 Gew.-% Cr, 5-30 Gew.-% Ni und 0,1-7 Gew.-% Cu enthält und der Rest Co und eine geringe Menge einer Verunreinigung ist.

4. Magnetisches Aufzeichnungsmedium nach Anspruch 1 und 2, wobei

der magnetische Film 7-26 Gew.-% Cr, 5-30 Gew.-% Ni, 0,1-4 Gew.-% Al und 4 Gew.-% oder weniger Cu enthält und der Rest Co und eine geringe Menge einer Verunreinigung ist.

5. Magnetisches Aufzeichnungsmedium nach Anspruch 1, wobei

der magnetische Film 7-26 Gew.-% Cr, 5-30 Gew.-% Ni und 0,1-5 Gew.-% P enthält und der Rest Co und eine geringe Menge einer Verunreinigung ist.

6. Magnetisches Aufzeichnungsmedium nach einem der Ansprüche 1 bis 5, wobei

der magnetische Film ein senkrecht magnetischer Anisotropiefilm ist.

7. Magnetisches Aufzeichnungsmedium nach einem der Ansprüche 1 bis 6, wobei

das Substrat eine Polymerfolie ist.

8. Magnetisches Aufzeichnungsmedium nach Anspruch 7, wobei

ein weichmagnetischer Film zwischen der Polymerfolie und dem magnetischen Film gebildet ist.

9. Magnetisches Aufzeichnungsmedium nach Anspruch 8, wobei

der weichmagnetische Film ein Permalloyfilm ist.

10. Magnetisches Aufzeichnungsmedium nach Anspruch 7, wobei

ein Ti-Film zwischen der Polymerfolie und dem senkrecht magnetischen Anisotropiefilm gebildet ist.

11. Magnetisches Aufzeichnungsmedium nach Anspruch 7, wobei

ein Ge-Film zwischen der Polymerfolie und dem senkrecht magnetischen Anisotropiefilm gebildet ist.

12. Magnetisches Aufzeichnungsmedium nach Anspruch 7, wobei

ein Si-Film zwischen der Polymerfolie und dem senkrecht magnetischen Anisotropiefilm gebildet ist.

13. Magnetisches Aufzeichnungsmedium nach Anspruch 7, wobei

ein Metalloxydfilm zwischen der Polymerfolie und dem senkrecht magnetischen Anisotropiefilm gebildet ist.

14. Magnetisches Aufzeichnungsmedium nach Anspruch 13, wobei

das Metalloxyd $Al_2O_3$ ist.

**Revendications**

1. Support d'enregistrement magnétique comprenant

un substrat constitué d'un matériau non magnétique, et

un film magnétique qui est formé sur ledit substrat et contient du Co, du Cr, du Ni, une faible quantité d'impureté et au moins un élément sélectionné parmi Cu, Al et P.

2. Support d'enregistrement selon la revendication 1, dans lequel

ledit film magnétique contient du Co, du Cr, du Ni, du Cu, du Al et une faible quantité d'impureté.

3. Support d'enregistrement magnétique selon la revendication 1, dans lequel

ledit film magnétique contient 7-26% en poids de Cr, 5-30% en poids de Ni et 0,1-7% en poids de Cu, le reste étant constitué par du Co et une faible quantité d'impureté.

4. Support d'enregistrement magnétique selon les revendications 1 et 2, dans lequel

ledit film magnétique contient 7-26% en poids de Cr, 5-30% en poids de Ni, 0,1-4% en poids d'Al et 4% en poids de Cu ou moins, le reste étant constitué par du Co et une faible quantité d'impureté.

5. Support d'enregistrement magnétique selon la revendication 1, dans lequel

ledit film magnétique contient 7-26% en poids de Cr, 5-30% en poids de Ni et 0,1-5% en poids de P, le reste étant constitué par du Co et une faible quantité d'impureté.

6. Support d'enregistrement magnétique selon les revendications 1-5, dans lequel

ledit film magnétique est un film à anisotropie magnétique perpendiculaire.

7. Support d'enregistrement magnétique selon les revendications 1-6, dans lequel

ledit substrat est un film polymère.

8. Support d'enregistrement magnétique selon la revendication 7, dans lequel

un film magnétique souple est formé entre ledit film polymère et ledit film magnétique.

9. Support d'enregistrement magnétique selon la revendication 8, dans lequel ledit film magnétique souple est un film de permalloy.

10. Support d'enregistrement magnétique selon la revendication 7, dans lequel un film de Ti est formé entre ledit film polymère et ledit film à anisotropie magnétique perpendiculaire.

11. Support d'enregistrement magnétique selon la revendication 7, dans lequel un film de Ge est formé entre ledit film polymère et ledit film à anisotropie magnétique perpendiculaire.

12. Support d'enregistrement magnétique selon la revendication 7, dans lequel un film de Si est formé entre ledit film polymère et ledit film à anisotropie magnétique perpendiculaire.

13. Support d'enregistrement magnétique selon la revendication 7, dans lequel un film d'oxyde métallique est formé entre ledit film métallique et ledit film à anisotropie magnétique perpendiculaire.

14. Support d'enregistrement magnétique selon la revendication 13, dans lequel ledit oxyde métallique est l'$Al_2O_3$.